# EUROPEAN PATENT APPLICATION

(11) **EP 1 775 019 A1**
(43) Date of publication of application: **18.04.2007**
(21) Application number: 05745777.2
(22) Date of filing: 31.05.2005
(51) Int. Cl.: B01J 27/19, B01J 27/188, B01J 35/10, C10G 45/08

(54) **CATALYST AND METHOD FOR HYDRODESULFURIZATION OF PETROLEUM HYDROCARBONS**

(30) Priority: 23.07.2004 JP 2004216336
(71) Applicant: Nippon Oil Corporation, Tokyo 105-8412 (JP)
(72) Inventor: Iki, Hideshi, Yokohama-shi, Kanagawa 2310815 (JP); Hayasaka, Kazuaki, Yokohama-shi, Kanagawa 2310815 (JP); Takahashi, Shinya, Yokohama-shi, Kanagawa 2310815 (JP)
(74) Representative: Grünecker, Kinkeldey, Stockmair & Schwanhäusser Anwaltssozietät
(86) International application number: PCT/JP2005/010295
(87) International publication number: WO 2006/011300

(57) **Abstract**

The present invention provides a hydrodesulfurization that can attain an extremely high depth of desulfurization to a sulfur content of 10 ppm by mass and maintain such a high desulfurization activity for a long period of time. The catalyst comprises an inorganic porous support containing alumina and phosphorus, at least one active metal selected from the metals of Group 8 of the periodic table, and at least one metal selected from the metals of Group 6A of the periodic table, the Group 8 metal and the Group 6A metal being contained in a molar ratio defined by [oxide of the Group 8 metal]/[oxide of the Group 6A metal] ranging from 0.055 to 0.150, and the content of the Group 6A metal in terms of oxide being in the range of 30 to 40 percent by mass based on the mass of the catalyst.

## Description

### [Field of the Invention]

The present invention relates to a hydrodesulfurization catalyst for petroleum hydrocarbons and a process for hydrodesulfurization. More specifically, the present invention relates to a process for hydrodesulfurizing petroleum hydrocarbons containing sulfurs under specific conditions using a specific catalyst.

### [Background of the Invention]

In recent years, awareness of the environmental issue and air pollution has been raised, and in particularly, has been directed to the sulfur components contained in fuels used for transportation purposes. For example, gasoline engines have been strongly demanded to be improved in fuel efficiency not only in the sense of resource conservation or economical factors but also in the sense of reduction of carbon dioxide emissions. Therefore, development and promotion of new combustion systems such as lean burn engines and direct gasoline-injection engines have been advanced under these situations. However, the components constituting the exhaust gas from these engines are not always the same as those to be treated with the conventional ternary exhaust gas treating catalysts, on which further improvement has been required. It has been indicated that the sulfur components contained in gasoline adversely affect such newly developed exhaust gas treatment systems or catalysts.

On the other hand, in addition to chemical substances such as SOx and NOx, fine particles so-called "particulates" are contained in the exhaust gas from a diesel engine using gas oil and are in danger of harming the human health. It has been proposed that a particulate trap filter such as DPF or a system capable of burning particulates be mounted downstream of an engine in order to remove particulates. The use of such devices in diesel powered automobiles have been studied. Furthermore, a reduction catalyst for removing NOx has been developed. However, these devices and catalysts are likely to be poisoned or deteriorated with SOx produced due to combustion of sulfur components in fuel. Such deterioration of the exhaust gas purification system or catalyst is a serious problem for diesel powered automobiles such as trucks that run longer distance than gasoline-fueled automobiles. In order to solve this problem, it is strongly demanded to decrease the sulfur content in gas oil as much as possible.

A gas oil fraction produced by distilling crude oil or cracking fuel oil generally contains 1 to 3 percent by mass of sulfur compounds and thus are usually used as a base gas oil after being hydrodesulfurized. The main sulfur compounds contained in petroleum hydrocarbons are thiophene, benzothiophene, dibenzothiophene, and their derivatives in the form of aromatic compounds. Some of sulfur compounds with a high boiling point have a developed heterocyclic structure or a structure having many alkyl groups attached to their aromatic rings, and are particularly poor in reactivity. These compounds thus inhibit desulfurization of the fractions from proceeding to a low sulfur level of 10 ppm by mass. It is presumable that the activating function of a catalyst required for removal of such sulfur compounds will be different from that of a catalyst with the conventional activation range.

Hydrodesulfurization of petroleum hydrocarbons is known to include a reaction system wherein the sulfur atoms are drawn directly from the sulfur compounds and a reaction system wherein it progresses through a reaction where the aromatic rings next to the sulfur atoms are hydrogenated. It is assumed that in particular desulfurization of compounds which are poor in desulfurization reactivity requires the latter reaction system wherein the aromatic rings are hydrogenated. Furthermore, in addition to the hydrogenation reaction, a decomposition reaction enabling sulfur-carbon bonds to be cleaved efficiently is also strongly demanded.

So far, the type, quantity, and percentage of active metals have been optimized within the conventionally conceivable extent to produce a hydrodesulfurization catalyst for refining petroleum. Under these circumstances, catalysts containing active metals such as cobalt-molybdenum or nickel-molybdenum have been vigorously optimized in these regards, and it has been found that for hydrodesulfurization catalysts containing such active metals, the optimum point where the desulfurization activity is highest is in the cobalt-molybdenum or nickel-molybdenum molar ratio range of 0.3 to 1 (see, for example, non-patent documents 1 and 2 below). However, as a result of various studies conducted by the inventors of the present invention, it was found that the hydrodesulfurization catalysts containing active metals in the foregoing range were not able to exhibit desulfurization activity enough to achieve an extremely high depth of desulfurization at which the sulfur components are reduced to 10 ppm by mass. This strongly suggests that a catalyst activation mechanism different from that expected to achieve the foregoing conventional desulfurization level be now required.

Although a method wherein the number of active site is increased by increasing the level of active metals to be supported may be used in order to achieve a higher desulfurization activity, there is a limit to increase the level of active metals even though using a porous support containing alumina as the main component, with a higher surface area. If active metals are excessively supported on a support, they will condense and be adversely decreased in activity. Furthermore, if active metals are excessively supported on a support, the pores of the resulting catalyst will be clogged, leading to some technical limitations that the catalyst fails to exert activity sufficiently or is extremely decreased in activity.

It is widely known that a conventional hydrodesulfurization catalyst incurs a decrease in catalytic activity due the formation of coke on the catalyst while used for hydrodesulfurization reaction. It is assumed that this is brought about because hydrocarbons in a feedstock oil are polycondensed while being decomposed thereby forming high molecular weight condensed aromatic components, which will cover the active sites of the catalyst. In order to prevent polycondensation of hydrocarbons, it is presumably effective to suppress the acidic properties of the catalyst involved in polycondensation. Therefore, it is presumable to add an alkali metal as a basic substance to the catalyst. However, it has been pointed out that addition of such an alkali metal would invite a decrease in hydrogenation activity (see, for example, non-patent document 3 below). Therefore, it has been conventionally difficult to prevent the formation of coke on the catalyst and maintaining the sufficient catalytic activity thereof.
(1) Non-Patent Document 1
   Industrial & Engineering Chemistry Fundamentals, American Chemistry Society, Vol. 25, pages 25 to 36, 1986 (U.S.A.), by Henrik Topsoe et al.
(2) Non-Patent Document 2
   Catalysis Today, Elsevier, Vol. 39, pages 13 to 20, 1997 (Holland), by Emmanuel Lecrenay, Kinya Sakanishi, and Isao Mochida
(3) Non-Patent Document 3
   Catalysis Today, Elsevier, Vol. 52, pages 381 to 495, 1999 (Holland), by Edward Furimsky and Franklin E. Massoth

### [Disclosure of the Invention]

It is an object of the present invention to provide a catalyst with an extremely high desulfurization activity and a process for hydrodesulfurization, which are capable of attaining an extremely high depth of desulfurization that is a sulfur content of 10 ppm by mass or less. It is also an obj ect to provide a catalyst which can maintain a further higher stable desulfurization activity for a long period of time.

The present invention was accomplished as a result of extensive research and study conducted by the inventors to achieve the foregoing objects. That is, according to the present invention, there is provided a hydrodesulfurization catalyst for petroleum hydrocarbons, comprising:
an inorganic porous support containing alumina and phosphorus;
at least one active metal selected from the metals of Group 8 of the periodic table; and
at least one metal selected from the metals of Group 6A of the periodic table:
   the Group 8 metal and the Group 6A metal being contained in a molar ratio defined by [oxide of the Group 8
   metal] /[oxide of the Group 6A metal] ranging from 0.055 to 0.150, and the content of the Group 6A metal in terms of oxide being in the range of 30 to 40 percent by mass based on the mass of the catalyst.

According to another aspect of the present invention, there is provided a process for hydrodesulfurizing petroleum hydrocarbons, comprising hydrodesulfurizing petroleum hydrocarbons using the hydrodesulfurization catalyst.

The present invention will be described in more detail below.

The catalyst of the present invention comprises an inorganic porous substance containing alumina and phosphorus, as a support. Alumina is contained in an amount of preferably 80 percent by mass or more, more preferably 85 percent by mass or more, and even more preferably 90 percent by mass or more, of the support. Alumina is a porous support providing the catalyst with such a suitable pore volume that hydrocarbon molecules with a boiling point of 230 to 380°C diffuse. If alumina is contained in an amount of less than 80 percent by mass, it would be difficult to form a support with a sufficient pore volume.

Phosphorus is contained in an amount, in terms of oxide, of preferably 0.5 to 10 percent by mass, more preferably 1 to 9 percent by mass, and even more preferably 3 to 8 percent by mass, of the support. Phosphorus of less than 0.5 percent by mass in terms of oxide would result in a catalyst which fails to exert a sufficient desulfurization activity, while phosphorus of more than 10 percent by mass would increase the acidic properties of the support and thus decompose hydrocarbons, possibly leading to a reduction in yield or in activity caused by the formation of coke due to the decomposition.

In addition to alumina and phosphorus, the support preferably contains at least one element selected from the group consisting of the elements of the Group 2A of the periodic table, in an amount, in terms of oxide, of 1 to 10 percent by mass. The content of this element is more preferably from 1.2 to 7 percent by mass and even more preferably from 1.5 to 5 percent by mass. The at least one element selected from the group consisting of those of the Group 2A is particularly preferably Mg or Ca. These elements may be used in combination, and particularly preferably Mg and Ca are combined. It is assumed that the mechanism attained by addition of these elements forms a complex oxide state together with alumina thereby suppressing the formation of coke on the active sites of the catalyst, exerting a positive synergistic effect with the supported active metal on the desulfurization active sites of the catalyst, and facilitating cleavage of the carbon-sulfur bonds. It is thus found that addition of these elements provides for two advantageous effect one of which is an improvement in dehydrogenation activity and the other of which is suppression of coke formation. The element of less than 1 percent by mass in terms of oxide would cause the resulting catalyst to be reduced in coke formation suppression effect, leading to a failure to maintain a stable desulfurization activity while the element of more than 10 percent by mass would exert a negative effect on the active metals, possibly resulting in a reduction in desulfurization activity.

There is no particular restriction on the method of preparing alumina mainly composing the support. For example, alumina may be prepared by neutralizing or hydrolyzing an aluminum salt and aluminate, or prepared through an intermediate obtained by hydrolyzing aluminum amalgam or aluminum alcoholate. Alternatively, commercially available alumina intermediates and boehmite powder may be used.

There is no particular restriction on the method of allowing the support to contain phosphorus. A method is usually employed in which phosphoric acid or an alkali salt thereof is added to alumina upon the preparation thereof. For example, phosphorus may be added in the form of an aluminum oxide gel obtained after it is added to an aluminum aqueous solution, or may be added to an prepared aluminum oxide gel. Alternatively, phosphorus may be added to a mixture of water or an acid aqueous solution and a commercially available alumina intermediate or boehmite powder when the mixture is kneaded. Preferably, the support contains phosphorus during the process of preparing an aluminum oxide gel. Phosphorus is present in the form of an oxide in the support.

There is no particular restriction on the method of allowing the support to contain an element selected from the group consisting of the elements of Group 2 of the periodic table. For example, a method may be employed in which an oxide, hydroxide, nitrate, sulfate or any other salt compound of any of these elements in the form of a solid or a solution is added to alumina. However, the element is preferably added in the form of a solution produced using a water soluble salt compound. The elements may be added using such materials at any stage of the preparation of alumina. Alternatively, alumina may be impregnated with a solution containing any of the elements after the alumina is calcined. Preferably, the element is added at any stage prior to calcination of alumina. The element is present in the form of an oxide in the support.

In addition to alumina, phosphorus, and at least one element selected from the group consisting of the elements of Group 2A of the periodic table, the support may contain silicon. There is no particular restriction on the method of allowing the support to contain silicon. Preferably, a method is usually employed in which silica sol, sodium silicate, or silicic acid is added to alumina upon preparation thereof. For example, silicon may be added to an aluminum aqueous solution which is then formed into an aluminum oxide gel containing silicon, or may be added to a prepared aluminum oxide gel. Alternatively, silicon may be added at a step of kneading a mixture of water or an acid aqueous solution and a commercially available alumina intermediate or boehmite powder. Preferably, silicon is contained in an aluminum oxide gel during the process of preparation thereof. Silicon is preferably contained in an amount, in terms of oxide, of 5 percent by mass or less, of the catalyst support. Silicon of more than 5 percent by mass would strengthen the acidic properties of the catalyst, possibly leading to decomposition thereof. Silicon is present in the form of an oxide (silica) in the support.

In the present invention, at least one metal selected from the metals of Group 8 in the periodic table and at least one metal selected from the metals of Group 6A in the periodic table are used as the active metals to be supported on the support. Examples of the Group 8 metal include Co and Ni while examples of the Group 6A metal include Mo and W. Combinations of the Group 8 metal and Group 6A metal are preferably Co-Mo, Ni-Mo, Co-W, Ni-W, Co-Ni-Mo, and Co-Ni-W, and more preferably Co-Mo and Ni-Mo.

The support ratio of the Group 8 metal and Group 6A metal is necessarily at a molar ratio defined by [Group 8 metal oxide]/[Group 6A metal oxide] ranging from 0.055 to 0.150, preferably 0.055 to 0.130, more preferably 0.060 to 0.125, and most preferably 0.060 to 0.120. The molar ratio of less than 0.055 would result in a catalyst which may be reduced in desulfurization activity because the sufficient number of desulfurization active site formed by the combination of these active metals are not obtained. The molar ratio of more than 0.150 would result in a catalyst which may be adversely reduced in desulfurization activity due to insufficient diffusion of molybdenum.

The content of the Group 6A metal in terms of oxide is in the range of preferably 30 to 40 percent by mass, more preferably 30 to 38 percent by mass, and most preferably 32 to 35 percent by mass based on the mass of the catalyst. The Group 6A metal of less than 30 percent by mass in terms of oxide would result in a catalyst which is less in active site and thus fails to exert sufficient desulfurization activity. The Group 6A metal of more than 40 percent by mass in terms of oxide would result in a catalyst which may be significantly reduced in activity due to the progress of condensation of the active metals during the use of the catalyst.

Preferably, phosphorus is supported as an active component together with the foregoing active metals. The amount of phosphorus to be supported is in the range of preferably 0.105 to 0.255, more preferably 0.120 to 0.240, and most preferably 0.130 to 0.205 when the amount is defined by a molar ratio of [phosphorus pentoxide]/[the Group 6A metal oxide]. Phosphorus contained in a molar ratio of less than 0.105 would fail to exhibit its effect sufficiently while phosphorus contained in a molar ratio of more than 0.255 would increase the acidic properties of the catalyst and thus accelerate decomposition thereof or coke forming reaction.

There is no particular restriction on the method of supporting the Group 8 and Group 6A metals, which are supported as the active metal components of the catalyst. Therefore, there may be used any conventional method employed when a hydrodesulfurization catalyst is produced. For example, a method is preferably employed in which a support is impregnated with a solution of salts of the active metals. Alternatively, an equilibrium adsorption method, pore-filling method, or incipient-wetness method is also preferably used. For example, the pore-filling method is a method in which the pore volume of a support is measured in advance, and then the support is impregnated with the same volume of a metal salt solution. There is no particular restriction on the method of impregnating the support with a solution. Therefore, any suitable method may be used depending on the amount of the metals to be supported and physical properties of the support.

There is no particular restriction on the method of allowing the support to support phosphorus. Phosphorus may be supported on the support together with a Group 8 metal and a Group 6A metal using a solution in which phosphorus coexists therewith, or before or successively after these active metals are supported on the support. Phosphorus may be supported on the support by any of the forgoing methods such as an equilibrium adsorption method.

The hydrodesulfurization catalyst of the present invention has an average pore radius sought by the BET method using nitrogen, in the range of preferably 30 to 45 Å, more preferably 30 to 38 Å. An average pore radius of smaller than 30 Å is not preferable because the reaction molecules can not diffuse sufficiently in the pores, resulting in low activity. An average pore radius of larger than 45 Å is not also preferable because the catalyst will have a smaller surface area and thus fail to exert desulfurization activity sufficiently. The pore volume of the catalyst with a pore radius of 30 Å or smaller is in the range of preferably 13 to 33 percent, more preferably 15 to 30 percent, and even more preferably 22 to 28 percent of the total pore volume. The pores with a pore radius of 30 Å or smaller are poorer in diffusiveness of reaction molecules than those with a pore radius of larger than 30 Å but can not be ignored because they are contributive to desulfurization reaction. The pore volume of less than 13 percent would result in a reduction in the effective surface area of the catalyst and thus a reduction in the activity thereof. The percentage of greater than 33 percent would only cause a reduction in the activity of the catalyst due to the influence of the diffusion of reaction molecules. The pore volume of the catalyst with a pore radius of 45 Å or larger is in the range of preferably 5 to 20 percent, more preferably 5 to 18 percent, and even more preferably 10 to 17 percent. It is assumed that the pores in this range are important because they exert an influence on the extent that reaction molecules reach the reaction sites. Therefore, the pore volume of less than 5 percent would result in a reduction in catalyst activity because reaction molecules fail to diffuse sufficiently. However, the pore volume of more than 20 percent would result in a reduction in the surface area of the catalyst and thus a reduction in the activation thereof.

The hydrodesulfurization catalyst of the present invention is suitable for desulfurization from sulfur molecules taking the structure of thiophenes, benzothiophenes, and dibenzothiophenes. Particularly suitable feedstocks to be hydrodesulfurized with the catalyst, containing such compounds are petroleum hydrocarbons containing 80 percent by volume or more of a fraction whose boiling point is in the range of 230 to 380°C. The values of these distillation characteristics indicated herein are those measured in compliance with the method described in JIS K 2254 "Petroleum products-Determination of distillation characteristics".

The petroleum hydrocarbons containing such fractions generally contain 20 to 30 percent by volume of total aromatic components, 0.8 to 2 percent by volume of sulfur components, and 100 to 500 ppm by mass of nitrogen components. In the present invention, the above-described petroleum hydrocarbons are hydrodesulfurized with the catalyst of the present invention thereby reducing the sulfur component concentration to 10 ppm by mass or less, preferably 7 ppm by mass or less.

The term "sulfur component concentration (sulfur component content)" used herein denotes the content by mass of the sulfur components based on the total mass of the petroleum hydrocarbon measured in compliance with the method described in JIS K 2541 "Crude oil and petroleum products-Determination of sulfur content" or ASTM-D5453.

Alternatively, the petroleum hydrocarbon feedstock to be treated with the catalyst of the present invention may be a straight fraction produced by distilling a crude oil so as to be in an appropriate boiling point range through an atmospheric distillation unit as well as a fraction produced by mixing fractions obtained from a hydrocracking unit, a fluid catalytic cracking unit, a thermal cracking unit such as a coker, and another hydrodesulfurization unit.

In the present invention, hydrodesulfurization of petroleum hydrocarbons is carried out using the above-described catalyst.

As an example of the conditions for the hydrodesulfurization process according to the present invention, the LHSV(Liquid Hourly Space Velocity) is in the range of preferably 0.3 to 2.0 h⁻¹, more preferably 0.35 to 1.7 h⁻¹, and even more preferably 0.4 to 1.2 h⁻¹. If the LHSV is less than 0.3 h⁻¹, an enormous plant investment for construction of the reactor or the like is required because the volume thereof must be extremely large in order to obtain a certain through put. If the LHSV is greater than 2.0 h⁻¹, the desulfurization reaction does not proceed sufficiently because the time for which the catalyst contacts the feedstock is shortened.

The hydrogen partial pressure is in the range of preferably 3 to 8 MPa, more preferably 3.5 to 7 MPa, and even more preferably 4 to 6.5 MPa. If the hydrogen partial pressure is less than 3 MPa, the catalyst fails to exert the desulfurization effect and may be significantly reduced in activity. If the hydrogen partial pressure is greater than 8 MPa, an enormous plant investment for replacing the compressor or enhancing the strength of the reaction apparatus is required.

The reaction temperature is in the range of preferably 300 to 380°C. If the reaction temperature is lower than 300°C, sufficient desulfurization or aromatic-hydrogenation reaction speed may not be attained. If the reaction temperature is higher than 380°C, the yield of the intended produced oil is decreased due to the deterioration of the color of or decomposition of the oil.

The hydrogen/oil ratio is in the range of preferably 100 to 500 NL/L. The hydrogen/oil ratio indicates the ratio of the hydrogen gas flow rate to the feed stock flow rate. The larger the ratio, the more sufficiently hydrogen gas is supplied to the reaction system and more quickly the substances poisoning the catalyst active sites, such as hydrogen sulfide can be removed to the outside of the system. As a result, the reactivity tends to be improved. However, if the ratio is in excess of 500 NL/L, the reactivity is improved to a certain extent but thereafter will be less improved. Furthermore, an enormous plant investment for replacing the compressor may be required. If the ratio is smaller than 100 NL/L, the reactivity is reduced and thus the desulfurization reaction may not proceed sufficiently.

### [Applicability in the Industry]

The catalyst of the present invention has an extremely high desulfurization activity and can attain an extremely high depth of desulfurization to a sulfur content of 10 ppm by mass or less. Furthermore, the catalyst can maintain such a high desulfurization activity over a long period of time.

### [Best Mode for Carrying out the Invention]

The present invention will be described in more details with reference to the following examples but is not limited thereto.

### (Example 1)

To 3000 g of an aqueous solution of 5 percent by mass of sodium aluminate were added 11.0 g of sodium silicate No. 3, and the mixture was placed in a vessel kept at a temperature of 65°C. A solution was prepared by adding 10.0 g of phosphoric acid (85% concentration) to 3000 g of an aqueous solution of 2.5 percent by mass of aluminum sulfate in a separate vessel kept at a temperature of 65°C. To this solution were added dropwise the solution containing sodium aluminate and an aqueous solution containing 13.0 g of magnesium sulfate heptahydrate and 5.0 g of calcium nitrate tetrahydrate at the same time. The addition of the solution was stopped when the mixture reached pH 7.0. The resulting slurry product was passed through a filter to be filtered out thereby obtaining a cake slurry. The cake slurry was placed in a vessel equipped with a reflux condenser and mixed with 150 ml of distilled water and 10 g of a 27 percent ammonia aqueous solution. The mixture was then heated and stirred at a temperature of 80°C for 24 hours. The slurry was placed in a kneader and kneaded, heating it at a temperature of 80°C or higher to remove the moisture, thereby obtaining a clay-like kneaded product. The kneaded product was placed in an extruder and then extruded into a cylindrical form with a diameter of 1.5 mm. The resulting cylindrical product was dried at a temperature of 110°C for one hour and then calcined at a temperature of 550°C thereby obtaining a molded support.

Into an eggplant-type flask were placed 50 g of the resulting molded support and then charged a solution for impregnation containing 27.0 g of molybdenum trioxide, 12.0 g of cobalt (II) nitrate hexahydrate, 4.5 g of phosphoric acid (85 percent concentration), and 2.0 g of malic acid, deaerating with a rotary evaporator so that the support was impregnated with the solution. The impregnated support was dried at a temperature of 120°C for one hour and then calcined at a temperature of 550°C, thereby obtaining Catalyst A. The properties of Catalyst A are set forth in Table 1 below.

### (Example 2)

Into an eggplant-type flask were placed 50 g of the molded support prepared in accordance with the procedures of Example 1, and then charged a solution containing 27.0 g of molybdenum trioxide, 12.0 g of nickel (II) nitrate hexahydrate, 4.5 g of phosphoric acid (85 percent concentration), and 2.0 g of malic acid, deaerating with a rotary evaporator so that the support was impregnated with the solution. The impregnated support was dried at a temperature of 120°C for one hour and then calcined at a temperature of 550°C thereby obtaining Catalyst B. The properties of Catalyst B are set forth in Table 1 below.

### (Example 3)

To 3000 g of an aqueous solution of 5 percent by mass of sodium aluminate were added 11.0 g of sodium silicate No. 3, and the mixture was placed in a vessel kept at a temperature of 65°C. A solution was prepared by adding 10.0 g of phosphoric acid (85% concentration) to 3000 g of an aqueous solution of 2.5 percent by mass of aluminum sulfate in a separate vessel kept at a temperature of 65°C. To this solution were added dropwise the solution containing sodium aluminate and an aqueous solution containing 20.0 g of magnesium sulfate heptahydrate at the same time. The addition of the solution was stopped when the mixture reached pH 7.0. The resulting slurry product was passed through a filter to be filtered out thereby obtaining a cake slurry. The cake slurry was placed in a vessel equipped with a reflux condenser and mixed with 150 ml of distilled water and 10 g of a 27 percent ammonia aqueous solution. The mixture was then heated and stirred at a temperature of 80°C for 24 hours. The slurry was placed in a kneader and kneaded, heating it at a temperature of 80°C or higher to remove the moisture, thereby obtaining a clay-like kneaded product. The kneaded product was placed in an extruder and then extruded into a cylindrical form with a diameter of 1.5 mm. The resulting cylindrical product was dried at a temperature of 110°C for one hour and then calcined at a temperature of 550°C thereby obtaining a molded support. Into an eggplant-type flask were placed 50 g of the resulting molded support and then charged a solution for impregnation containing 27.0 g of molybdenum trioxide, 12.0 g of cobalt (II) nitrate hexahydrate, 4.5 g of phosphoric acid (85 percent concentration), and 2.0 g of malic acid, deaerating with a rotary evaporator so that the support was impregnated with the solution. The impregnated support was dried at a temperature of 120°C for one hour and then calcined at a temperature of 550°C, thereby obtaining Catalyst C. The properties of Catalyst C are set forth in Table 1 below.

### (Example 4)

Catalyst A in an amount of 20 ml was loaded into a reactor tube with an inner diameter of 15 mm and then pre-sulfided with a straight gas oil (3 percent by mass of sulfur) to which dimethyldisulfide had been added such that the sulfur compound concentration was made 3 percent by mass, at an average catalyst layer temperature of 300°C, hydrogen partial pressure of 5 MPa, LHSV of 1 h⁻¹, and hydrogen/oil ratio of 200 NL/L, for 4 hours. After the pre-sulfidization, hydrodesulfurization was carried out by circulating a straight gas oil obtained from a Middle Eastern crude oil (10% recovered temperature: 225°C, 90% recovered temperature: 344°C, content of sulfur compounds: 1.20 percent by mass) at a reaction temperature of 340°C, pressure of 5.5 MPa, LHSV of 1 h⁻¹, and hydrogen/oil ratio of 200 NL/L. The hydrodesulfurization had been continued for 1000 hours, maintaining these conditions so as to measure how much the desulfurization activity was reduced and how much the sulfur compound concentration of the resulting oil was increased.

The same experiment was carried out for Catalysts B and C. The results are set forth in Table 2 below. More increased concentration indicates faster reduction in activity.

### (Comparative Example 1)

Into an eggplant-type flask were placed 50 g of molded support prepared in accordance with the procedures of Example 1, and then charged a solution containing 24.2 g of molybdenum trioxide, 23.6 g of cobalt (II) nitrate hexahydrate, 4.4 g of phosphoric acid (85 percent concentration), and 6.0 g of malic acid, deaerating with a rotary evaporator so that the support was impregnated with the solution. The impregnated support was dried at a temperature of 120°C for one hour and then calcined at a temperature of 550°C thereby obtaining Catalyst D. The properties of Catalyst D are set forth in Table 1 below.

### (Comparative Example 2)

To 3000 g of an aqueous solution of 5 percent by mass of sodium aluminate were added 18.0 g of sodium silicate No. 3, and the mixture was placed in a vessel kept at a temperature of 65°C. An aqueous solution of 2.5 percent by mass of aluminum sulfate was prepared in a separate vessel kept at a temperature of 65°C. To this solution were added dropwise the solution containing sodium aluminate. The addition of the solution was stopped when the mixture reached pH 7.0. The resulting slurry product was passed through a filter to be filtered out thereby obtaining a cake slurry. The cake slurry was placed in a vessel equipped with a reflux condenser and mixed with 150 ml of distilled water and 10 g of a 27 percent ammonia aqueous solution. The mixture was then heated and stirred at a temperature of 80°C for 24 hours. The slurry was placed in a kneader and kneaded, heating it at a temperature of 80°C or higher to remove the moisture, thereby obtaining a clay-like kneaded product. The kneaded product was placed in an extruder and then extruded into a cylindrical form with a diameter of 1.5 mm. The resulting cylindrical product was dried at a temperature of 110°C for one hour and then calcined at a temperature of 550°C thereby obtaining a molded support.

Into an eggplant-type flask were placed 50 g of the resulting molded support and then charged a solution for impregnation containing 27.0 g of molybdenum trioxide, 12.0 g of cobalt (II) nitrate hexahydrate, 4.5 g of phosphoric acid (85 percent concentration), and 2.0 g of malic acid, deaerating with a rotary evaporator so that the support was impregnated with the solution. The impregnated support was dried at a temperature of 120°C for one hour and then calcined at a temperature of 550°C, thereby obtaining Catalyst E. The properties of Catalyst E are set forth in Table 1 below.

### (Comparative Example 3)

The same experiment as that of Example 4 was carried out for Catalysts D and E. The results are set forth in Table 2 below.

**Table 1**

| | Example 1 | Example 2 | Example 3 | Comparative Example 1 | Comparative Example 2 |
|---|---|---|---|---|---|
| Catalyst | Catalyst A | Catalyst B | Catalyst C | Catalyst D | Catalyst E |
| Al₂O₃ content (mass% of Support) | 87.8 | 87.8 | 87.9 | 87.8 | 95.0 |
| SiO₂ content (mass% of Support) | 2.8 | 2.8 | 2.8 | 2.8 | 5.0 |
| P₂O₅ content (mass% of Support) | 6.4 | 6.4 | 6.4 | 6.4 | - |
| MgO content (mass% of Support) | 1.9 | 1.9 | 2.9 | 1.9 | - |
| CaO content (mass% of Support) | 1.1 | 1.1 | - | 1.1 | - |
| MoO₃ amount (mass% of catalyst) | 33.0 | 33.0 | 33.0 | 32.0 | 33.0 |
| CoO amount (mass% of catalyst) | 2.0 | - | 2.0 | 4.0 | 2.0 |
| NiO amount (mass% of catalyst) | - | 2.0 | - | - | - |
| P₂O₅ amount (mass% of catalyst) | 4.0 | 4.0 | 4.0 | 4.0 | 4.0 |
| [Group 8 metal oxide] / [Group 6A metal oxide] (mol/mol) | 0.116 | 0.117 | 0.116 | 0.24 | 0.116 |
| [Phosphorus pentoxide] / [Group 6A metal oxide] (mol/mol) | 0.123 | 0.123 | 0.123 | 0.127 | 0 |
| Average pore radius (Å) | 34 | 34 | 35 | 35 | 33 |
| Percentage of pore volume with an average pore radius of 30 Å or smaller (%) | 26 | 26 | 26 | 26 | 20 |
| Percentage of pore volume with an average pore radius of 45 Å or larger (%) | 16 | 15 | 16 | 16 | 13 |

**Table 2**

| | Example 4 | | | Comparative Example 3 | |
|---|---|---|---|---|---|
| Catalyst | Catalyst A | Catalyst B | Catalyst C | Catalyst D | Catalyst E |
| Sulfur content of oil produced by hydrodesulfurization (mass ppm) | 5.5 | 4.3 | 7.9 | 13.1 | 11.8 |
| Sulfur content of oil produced by hydrodesulfurization after 1000 hours (mass ppm) | 6.2 | 6.0 | 8.5 | 15.9 | 15.6 |
| Increase in sulfur concentration (mass ppm) | + 0.7 | + 1.7 | + 0.6 | + 2.8 | + 3.8 |

## Claims

1. A hydrodesulfurization catalyst for petroleum hydrocarbons, comprising:
an inorganic porous support containing alumina and phosphorus;
at least one active metal selected from the metals of Group 8 of the periodic table; and
at least one metal selected from the metals of Group 6A of the periodic table,
the Group 8 metal and the Group 6A metal being contained in a molar ratio defined by [oxide of the Group 8
metal] /[oxide of the Group 6A metal] ranging from 0.055 to 0.150, and the content of the Group 6A metal in terms of oxide being in the range of 30 to 40 percent by mass based on the mass of the catalyst.

2. The hydrodesulfurization catalyst according to claim 1, wherein the inorganic porous catalyst further contains at least one element selected from the group consisting of those of Group 2A of the periodic table.

3. The hydrodesulfurization catalyst according to claim 1 or 2, wherein the Group 8A metal of the periodic table is cobalt and/or nickel, and the Group 6A metal of the periodic table is molybdenum and/or tungsten.

4. The hydrodesulfurization catalyst according to any one of claims 1 to 3, wherein the inorganic porous support further supports phosphorus in a molar ratio defined by [phosphorus pentoxide]/[the Group 6A metal oxide] ranging from 0.105 to 0.255.

5. The hydrodesulfurization catalyst according to any one of claims 1 to 4, wherein the catalyst has an average pore radius sought by the BET method using nitrogen in the range of 30 to 45 Å, the pore volume of the catalyst with a pore radius of 30 Å or smaller is in the range of 13 to 33 percent of the total pore volume, and the pore volume of the catalyst with a pore radius of 45 Å or larger is in the range of 5 to 20 percent of the total pore volume.

6. A process for hydrodesulfurizing a petroleum hydrocarbon, comprising hydrodesulfurizing the petroleum hydrocarbon using the catalyst defined in any one of claims 1 to 5.

7. The process for hydrodesulfurizing a petroleum hydrocarbon according to claim 6 wherein the petroleum hydrocarbon contains 80 percent by volume or more of a fraction whose boiling point is in the range of 230 to 380°C.

8. The process for hydrodesulfurizing a petroleum hydrocarbon according to claim 6 or 7 wherein the oil produced by the process contains sulfur components in an amount of 10 ppm by mass or less.

9. The process for hydrodesulfurizing a petroleum hydrocarbon according to any of one of claims 6 to 8 wherein the petroleum hydrocarbon is hydrodesulfurized at an LHSV of 0.3 to 2.0 h⁻¹, hydrogen partial pressure of 3 to 8 MPa, reaction temperature of 300 to 380°C, and hydrogen/oil ratio of 100 to 500 NL/L.
